# EUROPEAN PATENT APPLICATION

(11) **EP 4 464 439 A1**
(43) Date of publication of application: **20.11.2024**
(21) Application number: 24171161.3
(22) Date of filing: 18.04.2024
(51) Int. Cl.: B22F 12/90, B22F 10/38, B22F 10/28, B22F 10/85, B33Y 10/00, B33Y 30/00, B33Y 50/02, B22F 10/37

(54) **SYSTEM AND METHOD FOR INSPECTING HEIGHT AND THERMAL INFORMATION**

(30) Priority: 20.04.2023 US 202363497231 P; 09.04.2024 US 202418630242
(71) Applicant: Additive Monitoring, Inc. dba Phase3D, Chicago, IL 60608 (US)
(72) Inventor: O'DOWD, Niall, Chicago, 60608 (US)
(74) Representative: Roth, Andy Stefan

(57) **Abstract**

A system for inspecting height and thermal information in additive manufacturing includes at least one processor to determine material quality and formation of porosity during additive manufacturing and use one of a phase mapping sensor and a height mapping sensor to identify a plurality of problem areas and investigate the plurality of problem areas with at least one of thermal analysis, emission profile, temperature, and emissivity data.

## Description

### CROSS-REFERENCE TO RELATED APPLICATION

This application claims the benefit of U.S. Provisional Application No. 63/497,231 filed April 20, 2023, entitled "SYSTEM AND METHOD FOR HEIGHT AND THERMOMETRY," the entire contents of which are incorporated herein by reference.

### BACKGROUND

The disclosure generally relates to additive manufacturing.

Additive manufacturing (AM) is witnessing explosive industrial growth and adoption within multiple US departments including the Department of Defense (DoD) and Department of Energy (DoE). The unique ability of AM to rapidly produce complex components supports a myriad of US national security missions, such as building a more lethal Joint force, increasing materiel readiness, transforming maintenance operations and supply chains including increased logistics resiliency, and improving self-sustainment. The NAVY is a main proponent of AM integration into the DoD, leading an explosive rate of adoption though substantial investment into the technology at many locations overseen by the US Naval Research Laboratory. Akin to growth within the commercial sector, where AM reported CAGRs of over 30% each year since 2018, continued investment is anticipated within the NAVY via programs such as the NAVY Additive Manufacturing Integration Plan, where, in fact, the first objective mentioned is to "develop the capability to rapidly qualify and certify (Q/C) AM components."

Despite the opportunities of AM, component quality remains a primary hindrance to the speed of adoption. Specifically, significant defects like lack-of-fusion (LOF) and Keyhole (KH) / material induced gas porosity occur often and are difficult to detect and mitigate. LOF occurs when an insufficient amount of energy is applied to melt a specific location of a powder bed, directly influenced by site-specific processing parameters, such as powder layer spreading, laser power, hatch spacing, and scan speed.

It is with these issues in mind, among others, that various aspects of the disclosure were conceived.

### SUMMARY

Provided herein are systems and methods for inspecting height and thermal information for additive manufacturing that may be done in realtime.

In one example, a system for inspecting height and thermal information in additive manufacturing may include at least one processor to determine material quality and formation of porosity during additive manufacturing and use one of a phase mapping sensor and a height mapping sensor to identify a plurality of problem areas and investigate the plurality of problem areas with at least one of thermal analysis, emission profile, temperature, and emissivity data.

In another example, a system for inspecting height and thermal information in additive manufacturing may include at least one processor and at least one of a phase mapping sensor and a height mapping sensor to receive phase or height inspection data, the at least one processor to combine the phase or height inspection data with thermal analysis, emission profile, temperature, and emissivity to predict defects or anomalies.

In another example, a method for inspecting height and thermal information in additive manufacturing may include determining, by at least one processor, material quality and formation of porosity during additive manufacturing and using one of a phase mapping sensor and a height mapping sensor to identify a plurality of problem areas and investigating the plurality of problem areas with at least one of thermal analysis, emission profile, temperature, and emissivity data.

In another example, a method for inspecting height and thermal information in additive manufacturing may include receiving, by at least one processor, at least one of phase and height inspection data from at least one of a phase mapping sensor and a height mapping sensor and combining, by at least one processor, the phase or height inspection data with thermal analysis, emission profile, temperature, emissivity to predict defects or anomalies.

The systems and methods are set forth in part in the description which follows, and in part will be obvious from the description, or can be learned by practice of the systems and methods.

The advantages of the systems and methods will be realized and attained by means of the elements and combinations particularly pointed out in the appended claims. It is to be understood that both the foregoing general description and the following detailed description are exemplary and explanatory only and are not restrictive of the systems and methods, as claimed.

Accordingly, it is an object of the invention not to encompass within the invention any previously known product, process of making the product, or method of using the product such that Applicants reserve the right and hereby disclose a disclaimer of any previously known product, process, or method. It is further noted that the invention does not intend to encompass within the scope of the invention any product, process, or making of the product or method of using the product, which does not meet the written description and enablement requirements of the USPTO (35 U.S.C. § 112) or the EPO (Article 83 of the EPC), such that Applicants reserve the right and hereby disclose a disclaimer of any previously described product, process of making the product, or method of using the product. It may be advantageous in the practice of the invention to be in compliance with Art. 53(c) EPC and Rule 28(b) and (c) EPC. All rights to explicitly disclaim any embodiments that are the subject of any granted patent(s) of applicant in the lineage of this application or in any other lineage or in any prior filed application of any third party is explicitly reserved. Nothing herein is to be construed as a promise.

### BRIEF DESCRIPTION OF THE DRAWINGS

The accompanying drawings illustrate embodiments and/or aspects of the disclosure and, together with the written description, serve to explain the principles of the disclosure. Wherever possible, the same reference numbers are used throughout the drawings to refer to the same or like elements of an embodiment, and wherein:

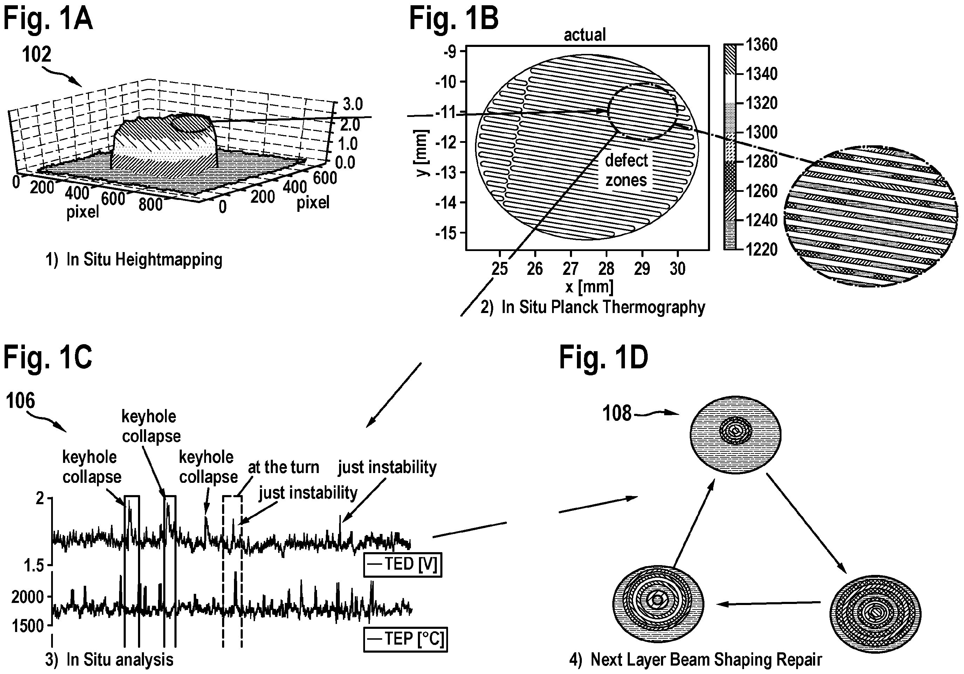

**FIGS. 1A-1D** show a schematic summary of the technology feedback loop. **FIG. 1A** is a graph from a height and thermal information inspection system showing in situ rapid height inspection that detects and classifies out-of-plane defects according to an example of the instant disclosure. **FIG. 1B** is a graph showing the height and thermal information inspection system flagging defect zones for high resolution in situ Planck thermography according to an example of the instant disclosure. **FIG. 1C** is a graph showing the gaussian beam shaping is used to heal and tailor material deposits according to an example of the instant disclosure. **FIG. 1D** is a schematic showing the next layer beam shaping repair according to an example of the instant disclosure.
**FIG. 2** is a height and thermal information inspection system installed on a metal powder bed fusion 3D printer according to an example of the instant disclosure.
**FIG. 3** is a Synchrotron x-ray data from the Advanced Photon Source showing a causal relationship between layer height defects and porosity in Ti64 powder bed fusion according to an example of the instant disclosure.
**FIG. 4** is a graph showing the results of AM density prediction using a Gaussian Process Regression (GPR) model from in-situ thermometry measurements according to an example of the instant disclosure.
**FIG. 5** shows a method of inspecting height and thermal information according to an example of the instant disclosure.

### DETAILED DESCRIPTION

The present disclosure is more fully described below with reference to the accompanying figures. The following description is exemplary in that several embodiments are described (e.g., by use of the terms "preferably," "for example," or "in one embodiment"); however, such should not be viewed as limiting or as setting forth the only embodiments of the present disclosure, as the disclosure encompasses other embodiments not specifically recited in this description, including alternatives, modifications, and equivalents within the spirit and scope of the invention. Further, the use of the terms "invention," "present invention," "embodiment," and similar terms throughout the description are used broadly and not intended to mean that the invention requires, or is limited to, any particular aspect being described or that such description is the only manner in which the invention may be made or used. Additionally, the invention may be described in the context of specific applications; however, the invention may be used in a variety of applications not specifically described.

The embodiment(s) described, and references in the specification to "one embodiment", "an embodiment", "an example embodiment", etc., indicate that the embodiment(s) described may include a particular feature, structure, or characteristic. Such phrases are not necessarily referring to the same embodiment. When a particular feature, structure, or characteristic is described in connection with an embodiment, persons skilled in the art may effect such feature, structure, or characteristic in connection with other embodiments whether or not explicitly described.

In the several figures, like reference numerals may be used for like elements having like functions even in different drawings. The embodiments described, and their detailed construction and elements, are merely provided to assist in a comprehensive understanding of the invention. Thus, it is apparent that the present invention can be carried out in a variety of ways, and does not require any of the specific features described herein. Also, well-known functions or constructions are not described in detail since they would obscure the invention with unnecessary detail. Any signal arrows in the drawings/figures should be considered only as exemplary, and not limiting, unless otherwise specifically noted. Further, the description is not to be taken in a limiting sense, but is made merely for the purpose of illustrating the general principles of the invention, since the scope of the invention is best defined by the appended claims.

It will be understood that, although the terms first, second, etc. may be used herein to describe various elements, these elements should not be limited by these terms. These terms are only used to distinguish one element from another. Purely as a non-limiting example, a first element could be termed a second element, and, similarly, a second element could be termed a first element, without departing from the scope of example embodiments. As used herein, the term "and/or" includes any and all combinations of one or more of the associated listed items. As used herein, the singular forms "a", "an," and "the" are intended to include the plural forms as well, unless the context clearly indicates otherwise. It should also be noted that, in some alternative implementations, the functions and/or acts noted may occur out of the order as represented in at least one of the several figures. Purely as a non-limiting example, two figures shown in succession may in fact be executed substantially concurrently or may sometimes be executed in the reverse order, depending upon the functionality and/or acts described or depicted.

Conditional language, such as, among others, "can," "could," "might," or "may," unless specifically stated otherwise, or otherwise understood within the context as used, is generally intended to convey that certain embodiments include, while other embodiments do not include, certain features, elements and/or steps. Thus, such conditional language is not generally intended to imply that features, elements and/or steps are in any way required for one or more embodiments or that one or more embodiments necessarily include logic for deciding, with or without user input or prompting, whether these features, elements and/or steps are included or are to be performed in any particular embodiment.

Generally speaking, a system and method for inspecting height and thermal information may include a system such as a computing device and one or more sensors for determining formation of pores by an additive manufacturing system. The system may use a phase mapping sensor or a height mapping sensor to identify a plurality of problem areas and investigate the plurality of problem areas with thermal analysis, emission profile, temperature, or emissivity data. In one example, the problem areas may include grain structure, pores, lack of fusion, residual stress, or cracks.

The plurality of problem areas can be investigated using one of thermometry and optical tomography (OT).

A system for inspecting height and thermal information may include at least one processor and at least one of a phase mapping sensor and a height mapping sensor to receive phase or height inspection data. The at least one processor may combine the phase or height inspection data with thermal analysis, emission profile, temperature, and emissivity to predict defects or anomalies. In another example, the at least one processor may perform inspection of volumetric energy density of the additive manufacturing.

In another example, the at least one processor may certify performance of parts using data from at least one of height monitoring and thermal datasets.

In another example, the at least one processor may perform in situ monitoring, process control, and closed loop feedback. In another example, the at least one processor may control volumetric energy density.

As an example, the in situ monitoring may include an in situ height inspection, one of an in situ coaxial thermometry monitoring and optical tomography to detect defective zones, and a healing of the material deposits within a next layer.

As another example, the data from the height monitoring can be combined with one of local coaxial thermometry monitoring data and optical tomography data to predict lack-of-fusion and pores. Gaussian and or non-Gaussian beam parameters can be tuned to tailor and heal the additive manufacturing areas of predicted lack- of-fusion and pores.

In another example, the at least one processor may calibrate an associated additive manufacturing machine or process. In another example, the at least one processor may modify a printing process to achieve desired material properties results by tuning the printing process using inspection data.

In another example, the system may include a photodiode sensor array, a first photodiode in the photodiode sensor array to obtain emission in a 400-900 nm range, a second photodiode in the photodiode sensor array to obtain emission in a first wavelength band centered at 680 nm, and a third photodiode in the photodiode sensor array to obtain emission in a second wavelength band centered at 700 nm, the emission obtained by the photodiode sensor array used to determined keyhole (KH) and gas entrapped porosity for the additive manufacturing.

A rescanning strategy using a programmable laser with beam shaping can eliminate LOF defects. KH/material induced gas porosity is often spherical due to gas trapped during the closeout of a KH instability or in the raw metal powder particles used for AM processing. Gas porosity can be minimized with increasing scan speed and tuning to the appropriate power level.

The system may include hardware devices and software executed by at least one computing device that can be coupled to numerous 3D printers, e.g., additive manufacturing printers, to provide measurements of exposed surface of parts and feedstock material in realtime. The system may generate a spatially encoded phase value for each pixel on a measurement area. The hardware devices may include a structured light system such as digital fringe projection (DFP). DFP may include one or more projectors, one or more camera devices, and at least one computing device by timing, triggering, and data collection that controls and performs mathematical operations on images captured by the camera devices. DFP determines 3D measurements by projecting patterns onto a part that is being generated or printed as well as a feedstock material surface, records pattern deformation, and spatially encodes phase onto the surface while determining a height map that represents a 3D surface of measurement. The height map can reveal many different types of in-situ defects that can cause a whole-part rejection downstream. The in-situ defects may include warping, over-melting, under-melting, thermal deformation, lack-of-fusion, recoater blade hopping, powder streaks, powder depressions, and part protrusions, among others. The system can determine an impact of in-situ detected defects on final part quality and make decisions.

The system and method for inspecting height and thermal information may provide for real-time defect detection, mitigation, and correction strategies. The system and method for inspecting height and thermal information includes in situ monitoring, process control, and a closed loop feedback. The system and method for inspecting height and thermal information combines several key technologies to achieve a real-time inspection and correction system for AM such as powder bed fusion AM, as shown in **Figures 1A-1D****.**

The system and method for inspecting height and thermal information comprises 1) in situ height inspection with 2) in situ coaxial thermometry monitoring to detect defective zones, and 3) heal the material deposits within a next layer, as shown in **Figures 1A-1D****.** As shown in Figure 1A, the height data and thermal data, including thermal energy density, or thermal energy plank, or optical tomography data, or melt pool emission data may be combined in order to determine energy density. Raw temperature or emissivity data may be also included in the detection of outlier zones, combined with heightmaps of the melted layer surface or the powder spreading thickness or surface roughness. Analysis during the printing process (in situ) may be accomplished in real time to estimate part quality, metal formation, print quality, part performance, porosity inclusion, or other material characteristics. Next, as shown in Figure 1B, the height and thermal information inspection system may perform in situ Planck thermography 104 on defect zones. Next, in Figure 1C, the height and thermal information inspection system may perform in situ analysis 106. Next, in Figure 1D, the height and thermal information inspection system may perform next layer beam shaping repair 108.

In situ heightmapping inspects each layer rapidly to identify defective areas. Height data can be combined with local coaxial thermometry monitoring (reduced data size) data to predict LOF and pores. Gaussian and non-Gaussian beam parameters may be tuned to tailor and heal the AM areas of predicted LOF and pores.

### Real time in situ three-dimensional (3D) height inspection

Real time in situ 3D height inspection does not add time to build, powder and melted layer inspection, it is objective, repeatable, and can determine a proven causal relationship with LOF and gas entrapped pores.

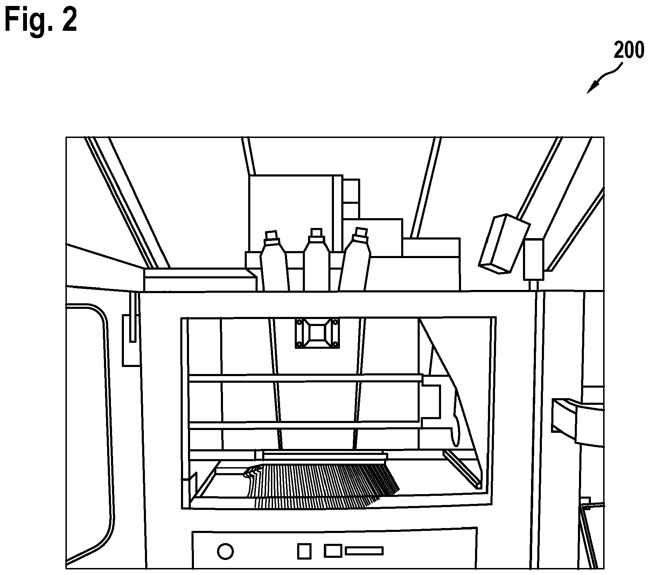

The system and method for inspecting height and thermal information may include a height and thermal information inspection system 200, which is a real-time inspection system for powder bed AM, as shown in **Figure 2****.** The height and thermal information inspection system 200 may be attached to an inside and/or an outside of an additive manufacturing machine chamber as shown in Figure 2. In one example, the height and thermal information inspection system 200 may include one or more projector devices and one or more camera devices that capture images. In addition, the height and thermal information inspection system 200 may include one or more sensors such as a phase mapping sensor and a height mapping sensor to identify a plurality of problem areas and investigate the plurality of problem areas with at least one of thermal analysis, emission profile, temperature, and emissivity data. The height and thermal information inspection system 200 may include one or more computing devices that may execute one or more applications to perform real-time inspection. As a result, the height and thermal information inspection system 200 may utilize thermometry and optical tomography to inspect the additive manufacturing machine and an additive manufacturing process being performed by the additive manufacturing machine.

The one or more computing devices may have an inspection application that may be a component of an application and/or service executable by the one or more computing devices. For example, the inspection application may be a single unit of deployable executable code or a plurality of units of deployable executable code. According to one aspect, the inspection application may include one component that may be a web application, a native application, and/or an application (e.g., an app) downloaded from a digital distribution application platform that allows users to browse and download applications developed with software development kits (SDKs) including the APPLET iOS App Store and GOOGLE PLAY^{®}, among others.

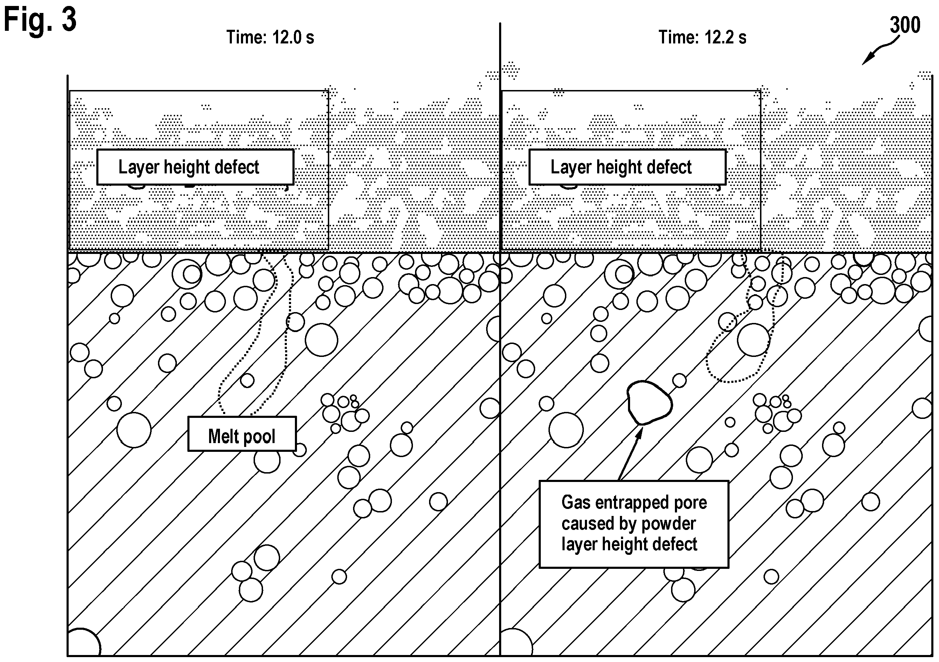

The height and thermal information inspection system 200 is an in situ inspection system that is calibrated to report objective part quality data, in the form of heightmaps of the spread powder layer and the melted layer, which has proven causal relationships with LOF and gas entrapped pores. Data from the Advanced Photon Source has collected direct instance recordings of KH gas entrapped pores forming caused by layer height defects 300, as shown in **Figure 3****,** inherently detectable by the height and thermal information inspection system 200.

Using an objective and repeatable structured light measurement for each layer, the height and thermal information inspection system 200 moves the in situ monitoring paradigm to in situ inspection, while maintaining data size and processing speed rapid enough to make go/no-go decisions within about two seconds, through real-time inspection (instead of subjective monitoring). In one example, the height and thermal information inspection system providing in situ inspection may be integrated into a metal powder bed fusion printer, binder jetting metal printer or another additive manufacturing device.

### Coaxial Melt Pool Monitoring System

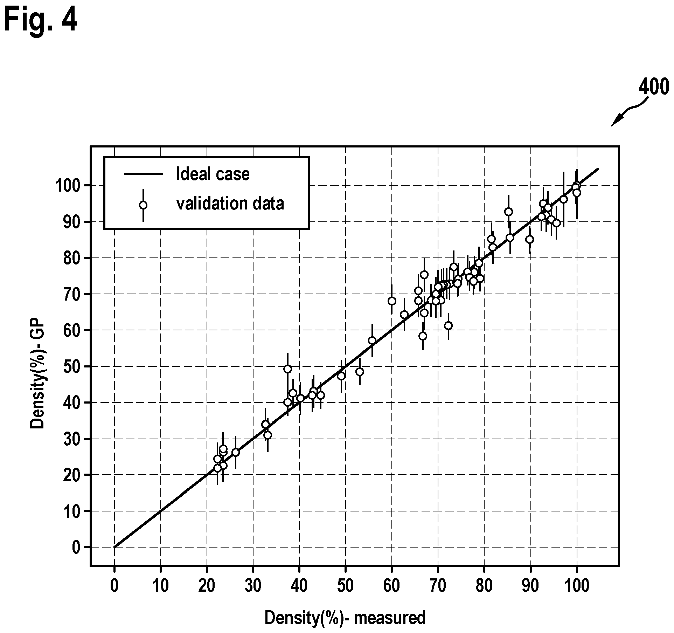

Figure 4 is a graph 400 showing the results of AM density prediction using a Gaussian Process Regression (GPR) model from in-situ thermometry measurements according to an example of the instant disclosure. In an example, the system 200 further includes a coaxial melt pool monitoring system. The Coaxial Melt Pool Monitoring System does not add time to build, high-resolution melt pool data at about 200kHz, has the ability to use data for the prediction of next layer process performance using Planck Thermometry, as shown in **FIG. 4****,** and has a demonstrated ability to detect process instabilities through instrumentation on an in-situ high-speed X-ray device that provides imaging.

The coaxial melt pool monitoring system can measure the emitted heat from the melt pool traveling back up the optical path parallel with the laser path. In one example, the coaxial melt pool monitoring system may include a device including one or more sensors and hardware such as one or more computing devices that receives data and information from a three-photodiode sensor array that may acquire data at up to 200kHz, yielding a spatial resolution on the order of about 5 µm along the scan path vector. One photodiode sensor can be used to measure emission in the about 400 to about 900 nm range and is used to acquire the Thermal Energy Density (TED). The other two photodiodes collect emitted light filtered to two narrow wavelength bands, 10 nm wide, centered at 680 and 700. Taking the ratio of the emitted light in these two wavelength bands measured by the photodiode allows the calculation through Planck's law of the Thermal Emission Planck (TEP) metric which is considered a relative temperature measurement. TEP and TED together are shown to be clear indicators of KH and gas entrapped porosity, in which direct observation of this effect was recorded and proven that monitoring of the emitted light from the melt pool yields a strong ability to detect meltpool and keyhole instabilities that lead to the formation of gas porosity. Although data sizes for analysis of a single layer prove unrealistic for closed loop analysis. Powder and melted layer zones identified with the height and thermal information inspection system as anomalies will be voxelated and used to reduce the processing time of the coaxial system.

Both the height and thermal information inspection system and the coaxial monitoring systems can be used to develop registration workflows, and a strong ability exists to leverage and use both the off-axis and on-axis monitoring approaches to implement layer-wise closed loop strategies.

### Programmable Laser with capability for Gaussian and non-Gaussian beam profile shape

Programmable Laser with capability for Gaussian and non-Gaussian beam profile shape may include an on the fly programmatic beam profile switching. Non-Gaussian beam profiles can increase productivity and stable processing window. Implementation and switching at the Laser/Fiber level can avoid optical complexity/alignment issues.

Commonly available L-PBF systems utilize Gaussian profile beams with diameters in the range between about 50 to about 200 µm. In some examples, these L-PBF systems can defocus/or modify the beam diameter programmatically, however, this either forces operation outside the Rayleigh length or requires a more complex optical assembly. In either scenario the result is still a Gaussian energy profile that has a high peak intensity that at higher energy densities leads to KH formation. Non-Gaussian profiles on the other hand have shown success in improving process stability, speed, and meltpool depth penetration to heal and tailor local areas. The system and method for inspecting height and thermal information can take advantage of a beam shaping system or a system having beam shaping fiber lasers with a beam-shaping function that can provide a single-mode beam and other beam profiles implemented on any additive manufacturing device. The system may enable programmatic control of the beam shape from Gaussian to non-Gaussian over certain index settings.

Given this capability the system has a clear ability to not only selectively apply different beam shapes to different toolpath geometry but also the ability to be controlled in a closed loop based on monitoring feedback. Selecting the correct index and other tunable parameters requires distinct process modeling and in situ inspection of the weld. Using real-time heightmapping and high resolution targeted thermal analysis, it is possible to tune the beam by the next layer to "heal" and "tailor" the AM deposit. In one example, this healing and tailoring behavior can be provided.

### Technical Objectives

The system may be used to integrate well-tested monitoring, data registration, and process control methods to heal AM defects into a real-time feedback system. It is known that the laser interacts with sub-surface porosity and that it is feasible for the aforementioned monitoring, data registration, and process control approaches to tailor and heal local defects in AM. It has also been shown that non-Gaussian beam shapes can achieve a range of unique microstructures. Additionally, it is known that in situ Planck thermography has successfully detected AM defects in deposited layers, but the data size and processing time for complete parts and layers prohibits integration into real-time correction. However, the addition of in situ heightmapping will reduce processing time to allow for real-time topology analysis, by identifying anomaly zones (factors which are proven to have causal link to internal defects) for reduced area targeted Planck thermometry analysis.

This system may provide a three-dimensional (3D) digital twin based system that can then be used to autonomously tailor local microstructure and heal defects on a next layer with algorithmic instructions for gaussian beamshaping (using the laser system).

The system may provide a reduced order modeling (ROM) approach using in situ heightmapping and in situ Planck thermometry to estimate subsurface porosity and metallurgical defects. The system may be used to determine what height and thermal signatures are present during metallurgical defect creation. In addition, the system may determine the statistical accuracy of prediction.

The system may be used to demonstrate the feasibility of healing and tailoring the AM deposit using gaussian and non-gaussian laser beam shaping. In addition, the system may determine next-layer beam parameters that are used to tailor and heal subsurface material. The system may be used to determine the statistical accuracy of improving microstructure.

In a first step, the system may perform in situ spatial registration. Next, the system may perform in situ data collection. Next, the system may perform post-inspection data collection. Next, the system may perform reduced order modeling. Next, the system may provide a demonstration of on subsurface healing. The system may perform an optional step of statistical verification of pore prediction and an optional step of statistical verification of a healing process.

In situ spatial recognition may include developing coordinate registration system between off-axis *in situ* heightmaps and on axis *in situ* Planck thermometry data.

In situ spatial registration may also allow for determining minimum tile size in heightmap for additional Planck thermometry analysis.

### In situ data collection

Approximately 338 cubic Ti64 samples may be fabricated using a 3D printer in builds using a variation of laser power and speed representative of different process quality levels and defect generation mechanisms. These samples can be designed to allow high contrast CT, have a unique asymmetrical shape, and may be arranged in a grid. A subset of samples may be printed with pre-designed internal void-type defect features of a range of sizes (40µm- 200µm) to represent different defect signature types.

*In situ* heightmap data for each powder and sintered layer can be recorded during fabrication at spatial pixel density of 100µm, and z-plane noise level <50µm. A pixel-to-laser coordinate transform can be established for comparison to ground truth.

Visual image data for each powder layer and sintered layer may be recorded, indicative of soot buildup. The same pixel-to-laser coordinate transform matrix may allow for comparison to ground truth.

Standard printer log data, such as temperature and humidity readings, segmented for each layer, may be recorded and stored.

### Post-Inspection data collection

Fabricated cubic samples may be CT scanned to obtain detailed internal microstructural defect information. Subsequently locations of significant defects (defined as porosities >80µm) can be identified for each sample. Several samples may be wire-EDM cut at the corresponding z-locations to expose cross sections, to verify ground truth of detected pores.

Defect locations may be analytically compared to *in situ* data.

### Reduced order monitoring

Gradient-based algorithm artificial intelligence/machine learning (AI/ML) training can be undertaken to obtain the maximum likelihood of porosity location estimates based on heightmapping and thermometry data. Data may be split into *k* evenly sized sets, such that *k* - 1 data sets can be used for model training, leaving the remaining set for validation. Model testing may be conducted over *k* iterations where, at each iteration, a different combination of testing and training data sets may be used. Final model performance may be judged by averaging over the ensemble of tests using a process known as k-fold cross-validation. Model performance may be measured using the Area Under Curve approach, e.g., the area underneath Receiver Operating Characteristic (ROC) curves that are obtained when varying the model's threshold decision value.

ROC curves can be used to analyze model performance over the full range of possible thresholds.

In one example, the system may have one or more computing devices having 64GB of RAM or another amount of RAM and execute one or more applications or scripts that may be in Python programming language or another language.

The system may output the validation of the AI/ML model over a range of threshold decision values, averaged over several runs where, at each run, different combinations of training and testing data are utilized.

As a result, the system may generate a final trained model.

### Demonstration of subsurface healing

It is possible to experimentally investigate the influence of varying beam profiles on melt pool depth and healing penetration.

Weld track geometries of single tracks and multi-track segments with varying laser power, scan speed, hatch distance, and beam profile (Gaussian profile and three different ringshaped profiles) can be analyzed and aligned with previously performed in-situ X-ray experiments.

To evaluate the process robustness, process windows can be identified by classifying the generated single tracks into different process categories. The influence of the beam profiles on productivity is studied by analyzing the molten cross-sectional areas and volumes per time.

Based on this work a set of "healing" conditions can be defined and subsequently used in anomalous areas identified by reduced order modeling.

### Statistical verification of pore prediction

An additional set of four or more builds in Ti64 may be printed using the technique developed herein.

Statistical methods such as k-mean clustering and hypothesis testing may be used to estimate the likelihood of predicting porosity at sizes such as <25µm, <100µm, and <200µm.

### Statistical verification of healing process

Utilizing the builds of statistical verification of pore prediction (or additional builds) with post-layer laser healing and tailoring, similar statistical analysis of the effectiveness of the next-layer processing may be performed.

Similar post inspection to post-inspection data collection may be repeated for building with the healing process and without.

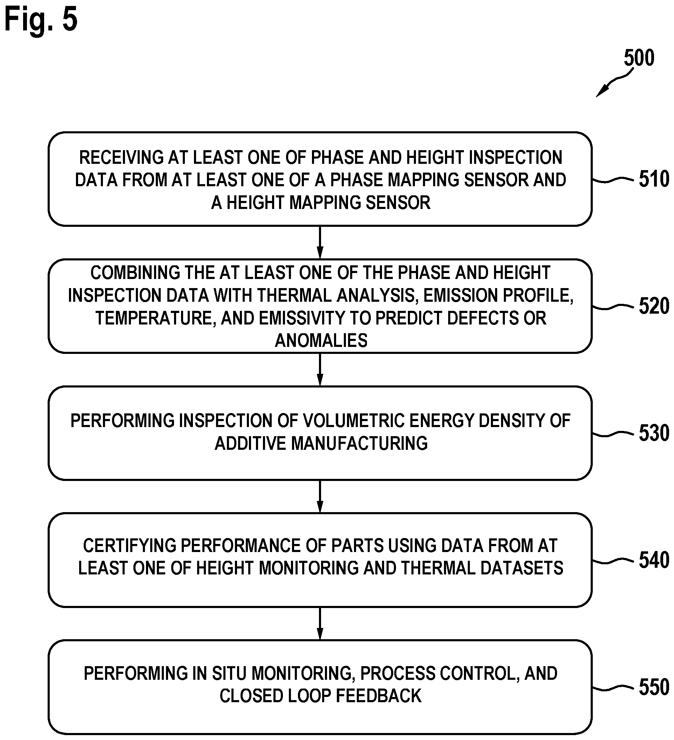

Figure 5 shows a method 500 of inspecting height and thermal information according to an example of the instant disclosure. Although the example method 500 depicts a particular sequence of operations, the sequence may be altered without departing from the scope of the present disclosure. For example, some of the operations depicted may be performed in parallel or in a different sequence that does not materially affect the function of the method 500. In other examples, different components of an example device or system that implements the method 500 may perform functions at substantially the same time or in a specific sequence.

According to some examples, the method 500 includes receiving at least one of phase and height inspection data from at least one of a phase mapping sensor and a height mapping sensor at block 510.

According to some examples, the method 500 includes combining the at least one of the phase and height inspection data with thermal analysis, emission profile, temperature, and emissivity to predict defects or anomalies at block 520.

According to some examples, the method 500 includes performing inspection of volumetric energy density of additive manufacturing at block 530.

According to some examples, the method 500 includes certifying performance of parts using data from at least one of height monitoring and thermal datasets at block 540.

According to some examples, the method 500 includes performing in situ monitoring, process control, and closed loop feedback at block 550.

According to some examples, the in situ monitoring may include an in situ height inspection, one of an in situ coaxial thermometry monitoring and optical tomography to detect defective zones, and a healing of the material deposits within a next layer.

According to some examples, the data from the height monitoring can be combined with one of local coaxial thermometry monitoring data and optical tomography data to predict lack-of-fusion and pores; and gaussian and or non-Gaussian beam parameters are tuned to tailor and heal the additive manufacturing areas of predicted lack- of-fusion and pores.

According to some examples, the method 500 may include calibrating an associated additive manufacturing machine or process.

According to some examples, the method 500 may include modifying a printing process to achieve desired material properties results by tuning the printing process using inspection data.

According to some examples, the method 500 may include determining emission by a photodiode sensor array using a first photodiode in the photodiode sensor array to obtain emission in a 400-900 nm range, a second photodiode in the photodiode sensor array to obtain emission in a first wavelength band centered at 680 nm, and a third photodiode in the photodiode sensor array to obtain emission in a second wavelength band centered at 700 nm and determining keyhole (KH) and gas entrapped porosity for the additive manufacturing based on the emission.

### Examples

The previous examples are put forth so as to provide those of ordinary skill in the art with a complete disclosure and description of how the compounds, compositions, articles, devices and/or methods claimed herein are made and evaluated, and are intended to be purely exemplary of the invention and are not intended to limit the scope of what the inventors regard as their invention. However, those of skill in the art should, in light of the present disclosure, appreciate that many changes can be made in the specific embodiments which are disclosed and still obtain a like or similar result without departing from the spirit and scope of the invention.

Efforts have been made to ensure accuracy with respect to numbers (e.g., amounts, 10 temperature, etc.), but some errors and deviations should be accounted for. Unless indicated otherwise, parts are parts by weight, temperature is in ° C. or is at ambient temperature, and pressure is at or near atmospheric.

### System

As used in this application, the terms "component" and "system" are intended to refer to a computer-related entity, either hardware, a combination of hardware and software, software, or software in execution. For example, a component can be, but is not limited to being, a process running on a processor, a processor, an object, an executable, a thread of execution, a program, and/or a computer. By way of illustration, both an application running on a server and the server can be a component. One or more components can reside within a process and/or thread of execution, and a component can be localized on one computer and/or distributed between two or more computers.

Generally, program modules include routines, programs, components, data structures, etc., that perform particular tasks or implement particular abstract data types. Moreover, those skilled in the art will appreciate that the inventive methods can be practiced with other computer system configurations, including single-processor or multiprocessor computer systems, minicomputers, mainframe computers, as well as personal computers, hand-held computing devices, microprocessor-based or programmable consumer electronics, and the like, each of which can be operatively coupled to one or more associated devices. The illustrated aspects of the innovation may also be practiced in distributed computing environments where certain tasks are performed by remote processing devices that are linked through a communications network. In a distributed computing environment, program modules can be located in both local and remote memory storage devices.

A computer typically includes a variety of computer-readable media. Computer-readable media can be any available media that can be accessed by the computer and includes both volatile and nonvolatile media, removable and non-removable media. By way of example, and not limitation, computer-readable media can comprise computer storage media and communication media. Computer storage media includes volatile and nonvolatile, removable and non-removable media implemented in any method or technology for storage of information such as computer- readable instructions, data structures, program modules or other data. Computer storage media includes, but is not limited to, RAM, ROM, EEPROM, flash memory or other memory technology, CD-ROM, digital versatile disk (DVD) or other optical disk storage, magnetic cassettes, magnetic tape, magnetic disk storage or other magnetic storage devices, or any other medium which can be used to store the desired information and which can be accessed by the computer.

Communication media typically embodies computer-readable instructions, data structures, program modules or other data in a modulated data signal such as a carrier wave or other transport mechanism, and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of the any of the above should also be included within the scope of computer-readable media.

Software includes applications and algorithms. Software may be implemented in a smart phone, tablet, or personal computer, in the cloud, on a wearable device, or other computing or processing device. Software may include logs, journals, tables, games, recordings, communications, SMS messages, Web sites, charts, interactive tools, social networks, VoiP (Voice Over Internet Protocol), e-mails, and videos.

In some embodiments, some or all of the functions or process(es) described herein and performed by a computer program that is formed from computer readable program code and that is embodied in a computer readable medium. The phrase "computer readable program code" includes any type of computer code, including source code, object code, executable code, firmware, software, etc. The phrase "computer readable medium" includes any type of medium capable of being accessed by a computer, such as read only memory **(ROM),** random access memory **(RAM),** a hard disk drive, a compact disc **(CD),** a digital video disc **(DVD),** or any other type of memory.

All publications and patent applications mentioned in this specification are herein incorporated by reference to the same extent as if each individual publication or patent application was specifically and individually indicated to be incorporated by reference.

While the invention has been described in connection with various embodiments, it will be understood that the invention is capable of further modifications. This application is intended to cover any variations, uses or adaptations of the invention following, in general, the principles of the invention, and including such departures from the present disclosure as, within the known and customary practice within the art to which the invention pertains.

Illustrative examples of the disclosure include:
Aspect 1: A system for inspecting height and thermal information in additive manufacturing, comprising: at least one processor to determine material quality and formation of porosity during additive manufacturing and use one of a phase mapping sensor and a height mapping sensor to identify a plurality of problem areas and investigate the plurality of problem areas with at least one of thermal analysis, emission profile, temperature, and emissivity data.
Aspect 2: The system of Aspect 1, wherein the plurality of problem areas are investigated using one of thermometry and optical tomography (OT).
Aspect 3: The system of Aspects 1 and 2, wherein the plurality of problem areas include at least one of grain structure, pores, lack of fusion, residual stress, and cracks.
Aspect 4: A system for inspecting height and thermal information in additive manufacturing, comprising: at least one processor and at least one of a phase mapping sensor and a height mapping sensor to receive phase or height inspection data, the at least one processor to combine the phase or height inspection data with thermal analysis, emission profile, temperature, and emissivity to predict defects or anomalies.
Aspect 5: The system of Aspect 4, the at least one processor further to perform inspection of volumetric energy density of the additive manufacturing.
Aspect 6: The system of Aspects 4 and 5, the at least one processor further to certify performance of parts using data from at least one of height monitoring and thermal datasets.
Aspect 7: The system of Aspects 4 to 6, the at least one processor further to perform in situ monitoring, process control, and closed loop feedback.
Aspect 8: The system of Aspects 4 to 7, the at least one processor further to control volumetric energy density.
Aspect 9: The system of Aspects 4 to 8, wherein the in situ monitoring comprises an in situ height inspection, one of an in situ coaxial thermometry monitoring and optical tomography to detect defective zones, and a healing of the material deposits within a next layer.
Aspect 10: The system of Aspects 4 to 9, wherein the data from the height monitoring is combined with one of local coaxial thermometry monitoring data and optical tomography data to predict lack-of-fusion and pores; and gaussian and or non-Gaussian beam parameters are tuned to tailor and heal additive manufacturing areas of predicted lack- of-fusion and pores.
Aspect 11: The system of Aspects 4 to 10, the at least one processor further to calibrate an associated additive manufacturing machine or process.
Aspect 12: The system of Aspects 4 to 11, the at least one processor further to modify a printing process to achieve desired material properties results by tuning the printing process using inspection data.
Aspect 13: The system of Aspects 4 to 12, further comprising a photodiode sensor array, a first photodiode in the photodiode sensor array to obtain emission in a 400-900 nm range, a second photodiode in the photodiode sensor array to obtain emission in a first wavelength band centered at 680 nm, and a third photodiode in the photodiode sensor array to obtain emission in a second wavelength band centered at 700 nm, the emission obtained by the photodiode sensor array used to determined keyhole (KH) and gas entrapped porosity for the additive manufacturing.
Aspect 14: A method for inspecting height and thermal information in additive manufacturing, comprising determining, by at least one processor, material quality and formation of porosity during additive manufacturing and using one of a phase mapping sensor and a height mapping sensor to identify a plurality of problem areas and investigating the plurality of problem areas with at least one of thermal analysis, emission profile, temperature, and emissivity data.
Aspect 15: The method of Aspect 14, wherein the plurality of problem areas are investigated using one of thermometry and optical tomography (OT).
Aspect 16: The method of Aspects 14 and 15, wherein the plurality of problem areas include at least one of grain structure, pores, lack of fusion, residual stress, and cracks.
Aspect 17: A method for inspecting height and thermal information in additive manufacturing, comprising receiving, by at least one processor, at least one of phase and height inspection data from at least one of a phase mapping sensor and a height mapping sensor and combining, by at least one processor, the phase or height inspection data with thermal analysis, emission profile, temperature, emissivity to predict defects or anomalies.
Aspect 18: The method of Aspect 17, further comprising performing inspection of volumetric energy density of the additive manufacturing.
Aspect 19: The method of Aspects 17 and 18, further comprising certifying performance of parts using data from at least one of height monitoring and thermal datasets.
Aspect 20: The method of Aspects 17 to 19, further comprising performing in situ monitoring, process control, and closed loop feedback.
Aspect 21: The method of Aspects 17 to 20, further comprising controlling volumetric energy density.
Aspect 22: The method of Aspects 17 to 21, further comprising determining emission by a photodiode sensor array using a first photodiode in the photodiode sensor array to obtain emission in a 400-900 nm range, a second photodiode in the photodiode sensor array to obtain emission in a first wavelength band centered at 680 nm, and a third photodiode in the photodiode sensor array to obtain emission in a second wavelength band centered at 700 nm and determining keyhole (KH) and gas entrapped porosity for the additive manufacturing based on the emission.

## Claims

1. A system for inspecting height and thermal information in additive manufacturing, comprising:
at least one processor to determine material quality and formation of porosity during additive manufacturing; and
use one of a phase mapping sensor and a height mapping sensor to identify a plurality of problem areas and investigate the plurality of problem areas with at least one of thermal analysis, emission profile, temperature, and emissivity data.

2. The system of claim 1, wherein the plurality of problem areas are investigated using one of thermometry and optical tomography (OT).

3. The system of claim 1, wherein the plurality of problem areas include at least one of grain structure, pores, lack of fusion, residual stress, and cracks.

4. A system for inspecting height and thermal information in additive manufacturing, comprising:
at least one processor; and
at least one of a phase mapping sensor and a height mapping sensor to receive phase or height inspection data,
the at least one processor to combine the phase or height inspection data with thermal analysis, emission profile, temperature, and emissivity to predict defects or anomalies.

5. The system of claim 4, the at least one processor further to perform inspection of volumetric energy density of the additive manufacturing.

6. The system of claim 4, the at least one processor further to certify performance of parts using data from at least one of height monitoring and thermal datasets.

7. The system of claim 4, the at least one processor further to perform in situ monitoring, process control, and closed loop feedback.

8. The system of claim 4, the at least one processor further to control volumetric energy density.

9. The system of claim 5, wherein the in situ monitoring comprises an in situ height inspection, one of an in situ coaxial thermometry monitoring and optical tomography to detect defective zones, and a healing of the material deposits within a next layer.

10. The system of claim 6, wherein the data from the height monitoring is combined with one of local coaxial thermometry monitoring data and optical tomography data to predict lack-of-fusion and pores and gaussian and/or non-Gaussian beam parameters are tuned to tailor and heal additive manufacturing areas of predicted lack- of-fusion and pores.

11. The system of claim 4, the at least one processor further to calibrate an associated additive manufacturing machine or process.

12. The system of claim 4, the at least one processor further to modify a printing process to achieve desired material properties results by tuning the printing process using inspection data.

13. The system of claim 4 further comprising a photodiode sensor array, a first photodiode in the photodiode sensor array to obtain emission in a 400-900 nm range, a second photodiode in the photodiode sensor array to obtain emission in a first wavelength band centered at 680 nm, and a third photodiode in the photodiode sensor array to obtain emission in a second wavelength band centered at 700 nm, the emission obtained by the photodiode sensor array used to determined keyhole (KH) and gas entrapped porosity for the additive manufacturing.

14. A method for inspecting height and thermal information in additive manufacturing, comprising:
determining, by at least one processor, material quality and formation of porosity during additive manufacturing; and
using one of a phase mapping sensor and a height mapping sensor to identify a plurality of problem areas and investigating the plurality of problem areas with at least one of thermal analysis, emission profile, temperature, and emissivity data.

15. A method for inspecting height and thermal information in additive manufacturing, comprising:
receiving, by at least one processor, at least one of phase and height inspection data from at least one of a phase mapping sensor and a height mapping sensor; and
combining, by at least one processor, the phase or height inspection data with thermal analysis, emission profile, temperature, emissivity to predict defects or anomalies.
